# EUROPÄISCHE PATENTSCHRIFT

(11) **EP 0 563 619 B1**
(45) Veröffentlichungstag und Bekanntmachung des Hinweises auf die Patenterteilung: **12.06.1996**
(21) Anmeldenummer: 93103636.2
(22) Anmeldetag: 06.03.1993
(51) Int. Cl.: B60K 23/08

(54) **Zugmachine**
Towing vehicle
Véhicule tracteur

(30) Priorität: 01.04.1992 DE 4210743
(43) Veröffentlichungstag der Anmeldung: 06.10.1993
(73) Patentinhaber: ROBERT BOSCH GMBH, 70442 Stuttgart (DE)
(72) Erfinder: Sandau, Hartmut, Dipl.-Ing., W-7141 Schwieberdingen (DE); Hesse, Horst, Dr. Dipl.-Ing., W-7000 Stuttgart 1 (DE); Loedige, Heinrich, Dipl.-Ing., W-7143 Vaihingen/Enz (DE)

(56) Entgegenhaltungen:
- EP-A- 424 932
- EP-A- 0 313 371
- EP-A- 0 410 441

## Beschreibung

### Stand der Technik

Die Erfindung geht aus von einer Zugmaschine, insbesondere einer landwirtschaftlich nutzbaren wie einem Traktor oder Baumaschinen-Fahrzeug nach der Gattung des Hauptanspruchs.

Eine derartige Zugmaschine mit zuschaltbarem Allradantrieb ist aus der EP 0 313 371 A2 bekannt. Bei solchen Zugmaschinen kann die vorhandene Antriebsleistung nicht immer optimal eingesetzt werden, da beispielsweise durch Veränderung der Abrollverhältnisse, Veränderung der Triebkraftbeiwerte oder durch Veränderungen der Antriebsübersetzungen bei Lenkeinschlag sich die Antriebsverhältnisse an Vorder- und Hinterachse bzw. deren Verhältnis zueinander ändern. Besonders kritisch werden die Veränderungen der Antriebsverhältnisse, wenn die angetriebenen Vorderräder nicht mehr zum Vortrieb des Fahrzeuges beitragen, sondern bremsend wirken und damit Blindleistung in das Antriebssystem umsetzen. Um derartige Antriebsfälle auszuschalten, muß daher der Antriebszustand der Vorderräder erkannt werden. Zu diesem Zweck wird durch einen Drehmomentsensor an der Antriebswelle zwischen Allradkupplung und Vorderachse das Drehmoment erfaßt und diese Signale zur Steuerung der Allradkupplung benutzt. Derartige Drehmomentsensoren haben den Nachteil, daß die Drehmomenterfassung und Übertragung der Meßwerte aus einem drehenden System heraus erfolgen muß und dementsprechend aufwendig ist. Ferner ist aus der EP 0 424 932 A1 ein Verteilergetriebe für Kraftfahrzeuge bekannt, bei dem an einer Abtriebswelle ein Drehmomentsensor angeordnet ist und dessen Signal zusammen mit anderen Signalen zum Ein- und Ausschalten einer Kupplung benutzt wird, die zwischen Verteilergetriebe und Abtriebswelle liegt. Auch hier erfolgt die Drehmomenterfassung unmittelbar von einem sich drehenden Teil aus.

Weiterhin ist es bereits bekannt, die Antriebsleistung der Zugmaschine in Verbindung mit Zugkraftregeleinrichtungen durch Drehmomentsensoren in Gelenkwellen oder Antriebswellen zu bestimmen. Derartige Drehmomentsensoren haben den Nachteil, daß die Drehmomenterfassung und Übertragung der Meßwerte aus einem drehenden System heraus erfolgen muß.

### Vorteile der Erfindung

Die erfindungsgemäße Zugmaschine mit den kennzeichnenden Merkmalen des Hauptanspruchs hat demgegenüber den Vorteil, daß auf einfache Art und Weise der Antriebszustand der Vorderräder bestimmt werden kann, ohne daß ein Eingriff in das drehende System notwendig ist. Die dafür eingesetzte Meßanordnung eignet sich darüber hinaus noch für vielfältige andere Aufgaben, ohne daß deren Aufbau wesentlich verändert werden muß. Die Meßanordnung zur Erkennung des Antriebszustandes der antreibbaren Vorderräder läßt sich im wesentlichen mit herkömmlichen Mitteln realisieren, ohne daß der Aufbau der Zugmaschine geändert werden muß.

Weitere Vorteile und vorteilhafte Weiterbildungen ergeben sich aus den Unteransprüchen und der Beschreibung.

### Zeichnung

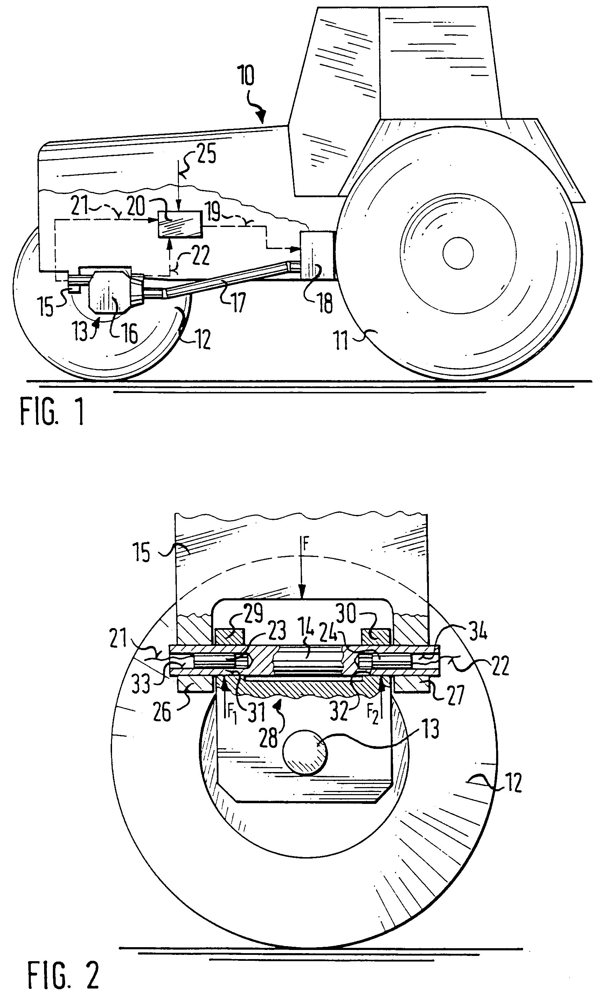

Ein Ausführungsbeispiel der Erfindung ist in der nachfolgenden Beschreibung und Zeichnung näher erläutert. Letztere zeigt in Figur 1 eine Seitenansicht einer landwirtschaftlich nutzbaren Zugmaschine in vereinfachter Form, in Figur 2 eine nur teilweise dargestellte Vorderachse mit Meßanordnung, teilweise im Schnitt.

### Beschreibung des Ausführungsbeispiels

In Figur 1 ist in stark vereinfachter Form die Seitenansicht eines als landwirtschaftlich nutzbare Zugmaschine eingesetzten Traktors 10 dargestellt, dessen permanent angetriebenen Hinterräder mit 11 und dessen Vorderräder mit 12 bezeichnet sind. Die Vorderräder 12 sind an einer pendelnd gelagerten Vorderachse 13 angeordnet, die wiederum über einen Pendelbolzen 14 (Figur 2) mit einem am Rahmen des Traktors 10 angebrachten Vorderachsbock 15 verbunden ist. Die Vorderräder 12 sind zum Antrieb über nicht dargestellte Antriebswellen, ein Differential 16 und eine Gelenkwelle 17 mit einer Abschaltkupplung 18 und dem nicht dargestellten Schaltgetriebe des Traktors 10 verbunden. Die nicht dargestellte Betätigungsvorrichtung der Abschaltkupplung 18 ist über eine Signalleitung 19 mit einem Steuergerät 20 verbunden. Dieses Steuergerät 20 erhält über zwei Eingangssignalleitungen 21, 22 Meßwerte von jeweils einem Meßelement 23 bzw. 24. Teil dieses Steuergerätes 20 ist weiterhin eine nur schematisch dargestellte Sollwerteingabe 25.

Die beiden Meßelemente 23, 24 sind Bestandteile des als Kraftmeßbolzen ausgebildeten Pendelbolzens 14, dessen Aufbau im wesentlichen bekannt ist. Dieser Pendelbolzen 14 ist in zwei mit Abstand zueinander angeordneten Augen 26, 27 des Vorderachsbockes 15 eingesteckt und fixiert und somit beidseitig gelagert. Zwischen den beiden Augen 26, 27 ist auf dem Pendelbolzen 14 die Achsaufhängung 28 der Vorderachse 13 schwenkbar gelagert. Die Achsaufhängung 28 hat dazu an ihrer Vorder- bzw. Rückseite zwei Lagerschenkel 29 bzw. 30 mit fluchtenden Bohrungen 31 bzw. 32 zur Aufnahme des Pendelbolzens 14.

In den Pendelbolzen 14 sind von den gegenüberliegenden Stirnseiten ausgehend zwei fluchtende Sackbohrungen 33 bzw. 34 eingebracht, die jeweils den Bereich der Augen 26 bzw. 27 und der Lagerschenkel 29 bzw. 30 durchdringen. Die Sackbohrung 33 dient zur Aufnahme des Meßelementes 23, während das zweite Meßelement 24 in der gegenüberliegenden Sackbohrung 34 angeordnet ist. Jedes der an sich bekannten Meßelemente besteht aus elektrischen Primär- und Sekundärspulen, deren Anordnung, Aufbau und Wirkungsweise daher nicht näher erläutert werden braucht. Es ist jedoch auch möglich, als Meßelement andere als die zuvor genannten einzusetzen, beispielsweise solche mit Hallelementen, Engewiderständen, Biegeelementen oder andere.

Das Ausgangssignal des Meßelementes 23 wird über die Eingangssignalleitung 21 dem Steuergerät 20 übermittelt, während das Meßsignal des Meßelementes 24 über die Eingangssignalleitung 22 an das Steuergerät geführt wird. Mit den beiden Meßelementen 23, 24 werden in den zugeordneten Wandabschnitten des Kraftmeßbolzens 14 Scherkräfte bestimmt, die aufgrund der Achslast (Normalkraft F) an der Vorderachse auftreten. Die Summe der mit F1 und F2 schematisch angedeuteten Scherkräfte ist ein Maß für die auf die Vorderachse einwirkende Achslast (Normalkraft F).

Die Differenz der Scherkräfte F1 und F2 bewertet mit dem Abstand der beiden Meßstellen ergibt ein Maß für das Drehmoment um die Vorderachse, d.h. das Moment mit dem sich die Vorderachse am Pendelbolzen bzw. am Lagerbock abstützt.

Ist bei Vorwärtsfahrt des Traktors 10 die Kraft F1 größer als die Kraft F2 (bei gleichem Abstand zur Vorderachse), wirkt ein als positiv angenommenes Drehmoment, d.h. die Vorderachse trägt zum Vortrieb des Fahrzeuges bei. Wird die Kraft F2 größer als die Kraft F1, wird dieses Drehmoment negativ, d.h. die Vorderachse bzw. die Vorderräder bremsen. Entsprechend der Sollwertvorgabe 25 am Steuergerät 20 wird bei Unterschreiten eines bestimmten Momentes bzw. bei negativem Drehmoment die Abschaltkupplung 18 betätigt, so daß die Vorderräder vom Schaltgetriebe abgetrennt werden und freilaufen. Bei Rückwärtsfahrt des Traktors drehen sich die Abschaltbedingungen entsprechend um. Über die Sollwerteingabe 25 des Steuergerätes 20 wird diesem beispielsweise der Schaltzustand des Schaltgetriebes eingegeben, und es können unterschiedliche Abschaltbedingungen für die Abschaltkupplung festgelegt werden.

Durch Summierung der beiden Meßsignale der Meßelemente 23, 24 kann - wie zuvor beschrieben - die Achlast (Normalkraft F) der Vorderachse bestimmt werden. Damit kann auch die notwendige Balastierung des Traktors - bei Arbeiten mit unterschiedlichen Anbaugeräten bzw. bei unterschiedlichen Arbeitsbedingungen - ermittelt werden. Die beschriebene Meßeinrichtung, d.h. der Pendelbolzen 14 und das Steuergerät 20 bzw. ein entsprechendes, können auch für eine aktive Schwingungsdämpfung, oder für einen Wiegevorgang benutzt werden.

Es ist weiterhin möglich, diese Meßanordnung auch für eine Steuerung bzw. Regelung der Bremskraftverteilung auf die beiden Achsen bei unterschiedlichem Belastungszustand des Fahrzeuges durch Heck- bzw. Frontanbau von Arbeitsgeräten zu verwenden.

## Patentansprüche

1. Zugmaschine, insbesondere landwirtschaftlich nutzbare wie Traktor oder Baumaschinen-Fahrzeug, mit einer Vorderachse (13) mit antreibbaren Vorderrädern (12), die über eine Allradkupplung (18) mit einer Ansteuervorrichtung (20) zusätzlich zu den angetriebenen Hinterrädern (11) zu- und abschaltbar sind, wobei der Vorderachse (13) eine Meßanordnung (23, 24) zugeordnet ist, mit der ein Drehmoment bestimmt wird, das der Ansteuervorrichtung (20) für die Allradkupplung zugeführt wird, dadurch gekennzeichnet, daß die Vorderachse (13) mittels eines als Kraftmeßbolzen ausgebildeten Pendelbolzens (14) gelagert ist, der mit zwei Meßelementen (23, 24) versehen ist und die Meßanordnung bildet, mit der ein Drehmoment um die Vorderachse (13) bestimmt wird, das ein Maß für die Ansteuerung der Allradkupplung (18) ist.

2. Zugmaschine nach Anspruch 1, dadurch gekennzeichnet, daß die Ausgangssignale der Meßelemente (23, 24) einem als Ansteuervorrichtung dienenden Steuergerät (20) zugeführt werden.

3. Zugmaschine nach einem der Ansprüche 1 oder 2, dadurch gekennzeichnet, daß eines der Meßelemente (23) bezüglich der Längsrichtung der Zugmaschine vor der Vorderachse (13) und daß das andere Meßelement (24) hinter der Vorderachse (13) angeordnet ist.

4. Zugmaschine nach einem der Ansprüche 1 bis 3, dadurch gekennzeichnet, daß die Meßsignale der Meßanordnung zur Achslastbestimmung summiert werden.

5. Zugmaschine nach einem der Ansprüche 2 bis 4, dadurch gekennzeichnet, daß die Zugmaschine ein Schaltgetriebe hat, dessen Schaltzustand dem Steuergerät (20) übermittelt wird.

## Claims

1. Towing vehicle, in particular a vehicle which can be used for agricultural purposes, such as a tractor or a building machine vehicle, having a front axle (13) with drivable front wheels (12) which, by means of a four wheel clutch (18) with an actuating device (20), can be connected and disconnected in addition to the driven rear wheels (11), the front axle (13) being assigned a measuring arrangement (23, 24) with which a torque is determined, which is fed to the actuating device (20) for the four wheel clutch, characterized in that the front axle (13) is mounted by means of a pendulum bolt (14) which is designed as a load-sensing bolt, is provided with two measuring elements (23, 24) and forms the measuring arrangement with which a torque about the front axle (13) is determined, which is a measure for the actuation of the four wheel clutch (18).

2. Towing vehicle according to Claim 1, characterized in that the output signals of the measuring elements (23, 24) are fed to a control unit (20) serving as actuating device.

3. Towing vehicle according to one of Claims 1 or 2, characterized in that one of the measuring elements (23) is arranged in front of the front axle (13) in relation to the longitudinal direction of the towing vehicle, and in that the other measuring element (24) is arranged behind the front axle (13).

4. Towing vehicle according to one of Claims 1 to 3, characterized in that the measuring signals of the measuring arrangement are summated to determine the axle load.

5. Towing vehicle according to one of Claims 2 to 4, characterized in that the towing vehicle has a gearbox, the switching state of which is transmitted to the control unit (20).

## Revendications

1. Tracteur, en particulier véhicule utilisable dans l'agriculture ou sur des chantiers de construction, à essieu avant (13) équipé de roues (12) rendues motrices qui, par l'intermédiaire d'un accouplement général (18) équipé d'un dispositif de commande (20), sont embrayables et débrayables en plus des roues arrière entraînées (11), tandis qu'un dispositif de mesure (23, 24) est associé à l'essieu avant (13) avec qui un couple est déterminé qui est transmis au dispositif de commande de l'accouplement (18), caractérisé en ce que l'essieu avant (13) est monté oscillant sur un axe (14) de type dynamométrique, équipé de deux éléments de mesure (23, 24) constituant le dispositif de mesure déterminant un couple sur l'essieu avant (13) servant de mesure pour la commande de l'accouplement général (18).

2. Tracteur selon la revendication 1, caractérisé en ce que les signaux délivrés par les éléments de mesure (23, 24) sont envoyés à un appareil (20) servant de dispositif de commande.

3. Tracteur selon une des revendications 1 ou 2, caractérisé en ce qu'un des éléments de mesure (23) est, par rapport à la direction longitudinale du tracteur, disposé devant l'essieu avant (13) tandis que l'autre élément de mesure (24) se trouve derrière cet essieu.

4. Tracteur selon une des revendications 1 à 3, caractérisé en ce que les signaux de mesure du dispositif de mesure sont additionnés par rapport à la détermination de la charge de l'essieu.

5. Tracteur selon une des revendications 2 à 4, caractérisé en ce qu'il est équipé d'une boîte de vitesses dont la position de commande est transmise à l'appareil de commande (20).
